# EUROPEAN PATENT APPLICATION

(11) **EP 4 749 581 A1**
(43) Date of publication of application: **27.05.2026**
(21) Application number: 25215825.8
(22) Date of filing: 14.11.2025
(51) Int. Cl.: G06V 10/25, G06V 10/20, G06V 10/764, G06V 20/52, G06V 20/70, G06V 40/10, G06V 40/20, G06V 20/40, G06V 20/64, H04N 23/611, G06V 10/26

(54) **IMAGE PROCESSING APPARATUS, IMAGE PROCESSING METHOD, COMPUTER-READABLE STORAGE MEDIUM AND COMPUTER PROGRAM**

(30) Priority: 20.11.2024 JP 2024202614
(71) Applicant: Canon Kabushiki Kaisha, Tokyo, 146-8501 (JP)
(72) Inventor: NISHIYAMA, Tomohiro, Ohta-ku, Tokyo, 146-8501 (JP); NAKATA, Masato, Ohta-ku, Tokyo, 146-8501 (JP)
(74) Representative: TBK

(57) **Abstract**

An image processing apparatus includes an obtaining unit that obtains image data, a subject detection unit that detects a subject region in the image data, a region detection unit that detects a first region different from the subject region in the image data, and a classification unit that classifies, based on overlap between first portion of the subject region and the first region, a subject existing within the first region and a subject existing outside the first region.

## Description

### TECHNICAL FIELD

The present disclosure relates to image processing of detecting a subject in an image.

### BACKGROUND

When a scene in a sports ground or a venue in a sport, an event, or the like is shot by a user or automatically distributed, it is necessary to distinguish competitors and performers from surrounding spectators in order to set a competitor or performer as a subject of interest to be an autofocus control (AF) target or a tracking control target. However, if a competitor or performer and a spectator in an image are adjacent to each other, the spectator may erroneously be recognized as a subject of interest.

Japanese Patent Laid-Open No. 2006-330567 describes a technique in which in a case where a subject (past subject) at the time of previous focus detection cannot be regarded as identical to a subject (new subject) at the time of current focus detection, the past subject is continuously focused on while the new subject is farther than the past subject. Japanese Patent Laid-Open No. 2011-065338 describes a technique of estimating the position of a subject on a road surface based on a contact position at which the subject contacts the road surface.

### SUMMARY

According to Japanese Patent Laid-Open No. 2006-330567, if a spectator as a new subject is closer than a competitor as a past subject, the spectator is unwantedly focused on. According to Japanese Patent Laid-Open No. 2011-065338, the subject needs to contact the ground, and it is impossible to estimate the position of the subject located at a position higher than the ground or the position of the subject who is cut off from an image.

The present disclosure has been made in consideration of the aforementioned problems, and provides technical advantages in that it is possible to readily identify a subject of interest in an image and improve processing accuracy with respect to the subject of interest.

In order to solve the aforementioned problems, the present disclosure in its first aspect provides an image processing apparatus as specified in claim 1. Optional features are specified in claim 2 to 16.

In order to solve the aforementioned problems, the present disclosure in its second aspect provides an image processing method as specified in claim 17.

In order to solve the aforementioned problems, the present disclosure in its third aspect provides a computer-readable storage medium as specified in claims 18.

In order to solve the aforementioned problems, the present disclosure in its fourth aspect provides a computer program as specified in claim 19.

According to the present disclosure, it is possible to readily identify a subject of interest in an image and improve processing accuracy with respect to the subject of interest.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a block diagram exemplifying an apparatus configuration according to a first embodiment;
Fig. 2 is a flowchart exemplifying control processing according to the first embodiment;
Figs. 3A and 3B are views each for explaining a determination target region according to the first embodiment;
Fig. 4 is a table exemplifying a region inside/outside determination result according to a second embodiment;
Fig. 5 is a view for explaining a sports region detection result according to the second embodiment;
Fig. 6 is a flowchart exemplifying sports region detection processing according to a third embodiment; and
Fig. 7 is a block diagram exemplifying an apparatus configuration according to a fourth embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

This embodiment will describe an example in which when shooting or automatically distributing a scene in a sports ground or a venue in a sport, an event, or the like, a subject of interest existing in a field or on a stage in an image is identified, and then undergoes autofocus control (AF) or tracking control or is automatically edited or distributed.

### [First Embodiment]

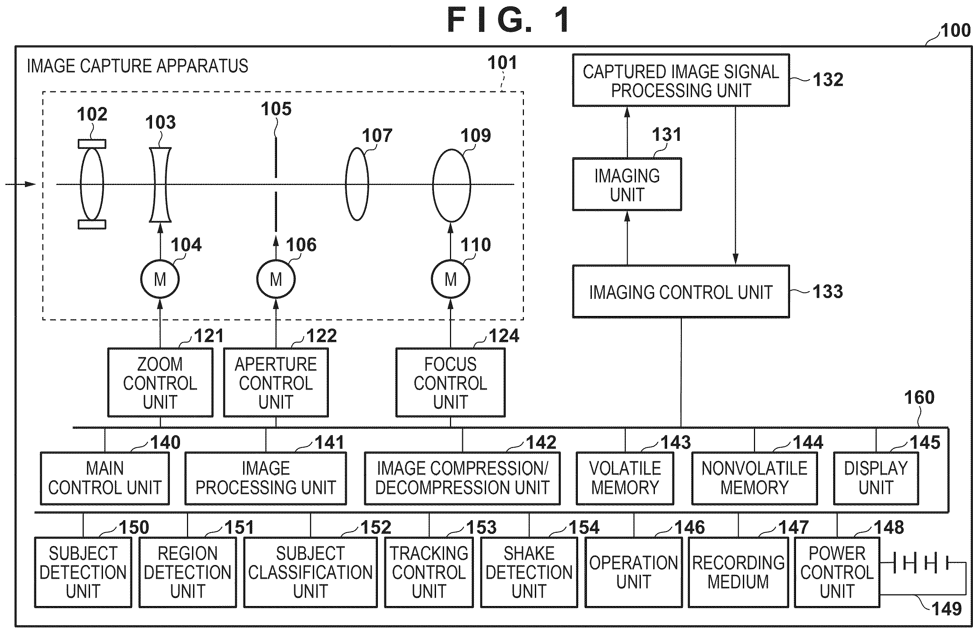

The first embodiment will be described first with reference to Fig. 1.

The first embodiment will describe an example of applying an image processing apparatus to an image capture apparatus, identifying a subject of interest existing in a field or on a stage in an image, and performing AF control or tracking control for the subject of interest.

Note that the image capture apparatus of this embodiment is applied to a digital still camera, a digital video camera, a smartphone, a tablet computer, and the like.

### <Apparatus Configuration>

First, the configuration and function of an image capture apparatus according to this embodiment will be described with reference to Fig. 1.

Fig. 1 is a block diagram exemplifying the configuration of the image capture apparatus according to this embodiment.

An image capture apparatus 100 according to this embodiment includes a lens unit 101 controlled by a main control unit 140. The lens unit 101 forms a shooting optical system that causes an imaging unit 131 to form an optical image of a subject as reflected light from the subject under the control of the main control unit 140.

The lens unit 101 includes a fixed first lens group 102, a zoom lens 103 driven by a zoom lens driving unit 104, an aperture 105 driven by an aperture driving unit 106, a fixed third lens group 107, and a focus lens 109 driven by a focus lens driving unit 110.

The zoom lens 103 moves in an optical axis direction to change a focal length, thereby performing a zoom operation. The aperture 105 changes an aperture diameter to adjust the light amount of a subject image formed on the image capture plane of the imaging unit 131. The focus lens 109 has a focus lens function of correcting the movement of the focal plane along with the zoom operation and a compensator lens function of adjusting the focus state.

A zoom control unit 121 drives the zoom lens 103 by controlling the motor of the zoom lens driving unit 104 under the control of the main control unit 140, thereby performing zoom control to change the focal length. An aperture control unit 122 drives the aperture 105 by controlling the motor of the aperture driving unit 106 under the control of the main control unit 140, thereby performing exposure control to adjust the aperture diameter of the aperture 105 and adjust the light amount in shooting. A focus control unit 124 drives the focus lens 109 by controlling the motor of the focus lens driving unit 110 under the control of the main control unit 140, thereby performing AF control to adjust the focus state of the subject.

Each lens of the lens unit 101 is normally formed from a plurality of lenses, but is represented by one lens in Fig. 1 in a simplified manner.

A subject image formed on the image capture plane of the imaging unit 131 by the lens unit 101 is converted into an electrical signal by the imaging unit 131. The imaging unit 131 is an image sensor including a photoelectric conversion element such as a CCD or CMOS sensor that photoelectrically converts the subject image (optical image) into an electrical signal. In the imaging unit 131, photoelectric conversion elements of m pixels in the horizontal direction and n pixels in the vertical direction are arranged. An image signal generated by the imaging unit 131 undergoes predetermined signal processing by a captured image signal processing unit 132, and is output as image data. This can obtain an image on the image capture plane. For example, in a case of a setting of NTSC and FHD/60p, image data corresponding to 1,920 pixels × 1,080 pixels is obtained for each frame (1/60 sec).

The image data processed by the captured image signal processing unit 132 is output to an imaging control unit 133, and temporarily stored in a volatile memory 143. The image data stored in the volatile memory 143 undergoes various kinds of image processes by an image processing unit 141, undergoes compression processing by an image compression/decompression unit 142, and is then recorded in a recording medium 147 such as a memory card.

The image compression/decompression unit 142 compresses and encodes the image data output from the image processing unit 141 by a moving image or still image compression method to record the thus obtained data as an image file in the recording medium 147, and decodes an image file read out from the recording medium 147. The recording medium 147 is a hard disk drive (HDD), a solid-state drive (SSD), a memory card, or the like. The recording medium 147 may be configured to be detachable from the image capture apparatus 100 or not to be readily detachable from the image capture apparatus 100.

The image processing unit 141 applies predetermined image processing to the image data stored in the volatile memory 143. The predetermined image processing includes resizing processing to an optimum size such as enlargement/reduction, processing of calculating the image similarity between frames, and gamma correction processing and white balance processing based on a subject region. Furthermore, the image processing unit 141 generates display data based on the image data having undergone the predetermined image processing and sends the display data to a display unit 145, thereby displaying a preview image or a live view image on the display unit 145. The image processing unit 141 generates display data by superimposing a subject detection result of a subject detection unit 150 on the image data having undergone the predetermined image processing and sends the display data to the display unit 145, thereby displaying an image including the subject detection result on the display unit 145.

The subject detection unit 150 executes subject detection processing for the image data to detect a subject region in the image and store a subject detection result (information such as the posture of a subject, the center of gravity of the subject, and face and eye positions) in the volatile memory 143. Note that in this embodiment, the subject is a person, and is a competitor who plays a sport, a performer in an event, a spectator, or the like. Note that the subject detected by the subject detection unit 150 is not limited to a person and may be a vehicle or an animal.

A region detection unit 151 executes region detection processing for the image data to detect a specific region different from a subject region in the image. The specific region is, for example, a field where a sport is played, a court, a goal, a stage in an event venue, or the like. This embodiment assumes that the region detection unit 151 detects a sports region where a sport is played, but the present disclosure is not limited to this. The region detection unit 151 may detect a sports region based on the image data, or obtain position information concerning a sports region from the outside. In a case where the outline of the sports region is rectangular, the region can be specified based on position information of four positions of the upper left, lower left, upper right, and lower right positions. As an example other than the rectangular region, in a case of athletic sports, a sports region (track) is elliptical, and thus the sports region can be specified based on position information of a contour line.

A subject classification unit 152 generates a determination target region by correcting a sports region based on the region detection results of the subject detection unit 150 and the region detection unit 151, and classifies a subject existing within the determination target region and a subject existing outside the determination target region (region inside/outside determination). Based on the region inside/outside determination result of the subject classification unit 152, the image processing unit 141 can determine whether the subject is a competitor or a spectator.

A tracking control unit 153 performs tracking control of continuously focusing on the subject of interest based on the region inside/outside determination result of the subject classification unit 152 in cooperation with the focus control unit 124. This embodiment assumes that the subject of interest is a competitor existing within the sports region, and there exist one or a plurality of subjects of interest.

A shake detection unit 154 includes a gyro sensor, an acceleration sensor, and an electromagnetic compass, and detects a shake of the image capture apparatus 100. The shake detection unit 154 detects shake amounts of the image capture apparatus 100 in three axis directions orthogonal to each other, and detects the change amounts of the position and posture of the image capture apparatus 100.

By using the volatile memory 143 as a ring buffer, the main control unit 140 can buffer image data of a plurality of frames captured within a predetermined period, and data such as the detection result of the subject detection unit 150 based on the image data, the region detection result of the region detection unit 151, the region inside/outside determination result of the subject classification unit 152, and the detection result of the shake detection unit 154.

The display unit 145 displays an image (live view) being captured or a shot still image, a moving image being recorded, detected subjects and a subject of interest in a displayed image, a GUI for an interactive operation, and the like. The display unit 145 is a display device such as a liquid crystal display or an organic EL display. The display unit 145 may be integrated with the image capture apparatus 100 or may be an external apparatus connected to the image capture apparatus 100.

An operation unit 146 is an operation member including switches, buttons, a ring, and a lever for accepting a user operation, and outputs, to the main control unit 140, an operation signal corresponding to the operation member operated by the user. The main control unit 140 performs control by outputting a control signal to each component of the image capture apparatus 100 including the lens unit 101 based on the operation signal. The operation member includes, for example, a touch panel integrated with the display unit 145. The shooting person as the user can perform various operations on the image capture apparatus 100 by operating the operation unit 146. The shooting person can make various settings in the image capture apparatus 100 by operating, using the operation unit 146, a Graphical User Interface (GUI) displayed on the display unit 145.

The operation unit 146 includes at least a still image shooting button, a moving image shooting button, a mode dial, and a power switch. The still image shooting button is an operation member for instructing the main control unit 140 to perform still image shooting processing. The moving image shooting button is an operation member for instructing the main control unit 140 to perform moving image shooting processing. The mode dial is an operation member for switching the operation mode of the image capture apparatus 100. The mode dial can be used to switch the operation mode of the image capture apparatus 100 to any of a still image shooting mode, a moving image shooting mode, and a reproduction mode. The power switch is an operation member for switching power-on/off of the image capture apparatus 100.

A power control unit 148 controls supply of power from a battery 149 to each component of the image capture apparatus 100 in accordance with the state of the image capture apparatus 100 under the control of the main control unit 140. The battery 149 is a secondary battery that can supply power to operate the image capture apparatus 100.

When the still image shooting button is pressed halfway in the still image shooting mode, the main control unit 140 starts auto exposure (AE) control and AF control. When the still image shooting button is pressed fully, the main control unit 140 executes still image shooting processing of recording the image data captured by the imaging unit 131 in the recording medium 147.

The main control unit 140 performs AE control and AF control for the image data (frame) captured by the imaging unit 131 when the moving image shooting button is pressed for the first time in the moving image shooting mode, continues moving image shooting processing of recording a moving image of a predetermined time in the recording medium 147, and stops the moving image shooting processing when the moving image shooting button is pressed again.

The volatile memory 143 is, for example, a DRAM, and is used as a buffer memory that temporarily holds image data captured by the imaging unit 131, an image display memory for the display unit 145, a work area of the main control unit 140, or the like.

A nonvolatile memory 144 is, for example, a flash ROM, and stores a control program executed by the main control unit 140, and the like. When the power is turned on by a user operation and the image capture apparatus 100 is activated, the control program stored in the nonvolatile memory 144 is read out (loaded) into a part of the volatile memory 143. The main control unit 140 controls the operation of the image capture apparatus 100 in accordance with the control program loaded into the volatile memory 143.

The main control unit 140 performs arithmetic processing for controlling the image capture apparatus 100 including the lens unit 101. The main control unit 140 includes a hardware processor such as a CPU or an MPU that controls the respective components of the image capture apparatus 100. The main control unit 140 controls the respective components of the image capture apparatus 100 by loading the program stored in the nonvolatile memory 144 into the volatile memory 143 and executing the program, thereby implementing the function of the image capture apparatus 100. Note that instead of controlling the overall image capture apparatus 100 by the main control unit 140, the overall image capture apparatus 100 may be controlled by causing a plurality of hardware components (for example, a plurality of processors or circuits) to share the processing.

The main control unit 140 executes AF control of controlling the focus control unit 124 to drive the focus lens 109 based on a focus detection result by a phase difference detection method or a TV-AF method.

In addition, the main control unit 140 executes auto exposure (AE) processing of automatically determining an exposure condition (shutter speed or accumulation time, f-number, and sensitivity) based on luminance information of a subject. For example, the luminance information of the subject can be obtained by the image processing unit 141. The main control unit 140 can determine the exposure condition with reference to a predetermined region such as the face of a person.

The respective components of the image capture apparatus 100 are connected to be able to exchange data via a bus 160, and controlled by the main control unit 140.

The subject detection unit 150 performs subject detection processing by inference processing using machine learning such as deep learning. A learned model used for machine learning is formed by a neural network, and is formed by a Convolutional Neural Network (CNN) in this embodiment. Note that an inference model according to this embodiment is not limited to the CNN and may be formed by a neural network such as Transformer. The subject detection processing may be performed using a rule-based method other than machine learning.

The inference processing by deep learning can be executed by a Graphics Processing Unit (GPU) or a Digital Signal Processor (DSP). The GPU or DSP is a processor capable of performing an enormous amount of product-sum operations, bias addition operations, and nonlinear processing, and has arithmetic processing capability of performing a matrix operation of a neural network and the like within a short time. Note that in the inference processing, the CPU of the main control unit 140 and the GPU or DSP of the subject detection unit 150 may perform arithmetic processing in cooperation with each other or one of the CPU of the main control unit 140 and the GPU or DSP of the subject detection unit 150 may perform arithmetic processing.

The subject detection unit 150 detects, as the position information and size information of the subject, the coordinates of a rectangular region circumscribing the subject detected from the image data. Furthermore, the subject detection unit 150 calculates reliability (probability value) representing the likelihood of the subject of interest for each subject based on the position information and size information of the subject. The reliability is represented by an integer value of 0 to 255, and the larger the value of the reliability is, the lower the possibility of a detection error is.

Even in a case where the region detection unit 151 detects a sports region, region detection processing is performed by inference processing using machine learning, similar to the subject detection unit 150. Similar to the subject detection unit 150, region detection processing may be performed using a rule-based method other than machine learning. The region detection unit 151 may output a rectangular region including a field, and may output the contour line of the field in a case where the field is elliptical.

Note that the function (function unit) of each component of the image capture apparatus 100 of this embodiment is implemented by hardware shown in Fig. 1 and/or a software program executed by the control unit operating as each function unit shown in Fig. 1. Furthermore, in a case where each function unit shown in Fig. 1 is formed by hardware instead of being implemented by software, a circuit configuration corresponding to each function unit shown in Fig. 1 is provided.

### <Control Processing of First Embodiment>

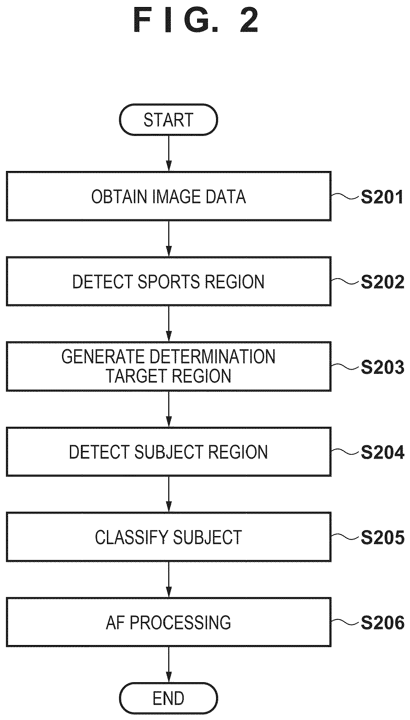

The control processing of the image capture apparatus 100 according to the first embodiment will be described next with reference to Fig. 2.

The processing shown in Fig. 2 is implemented when the main control unit 140 controls the respective components shown in Fig. 1 by using the learned model and executing the program stored in the nonvolatile memory 144.

In step S201, the imaging control unit 133 controls the imaging unit 131 to capture an image, and causes the captured image signal processing unit 132 to process an image signal obtained by the imaging unit 131, thereby obtaining image data.

In step S202, the region detection unit 151 detects a sports region from the image data obtained in step S201.

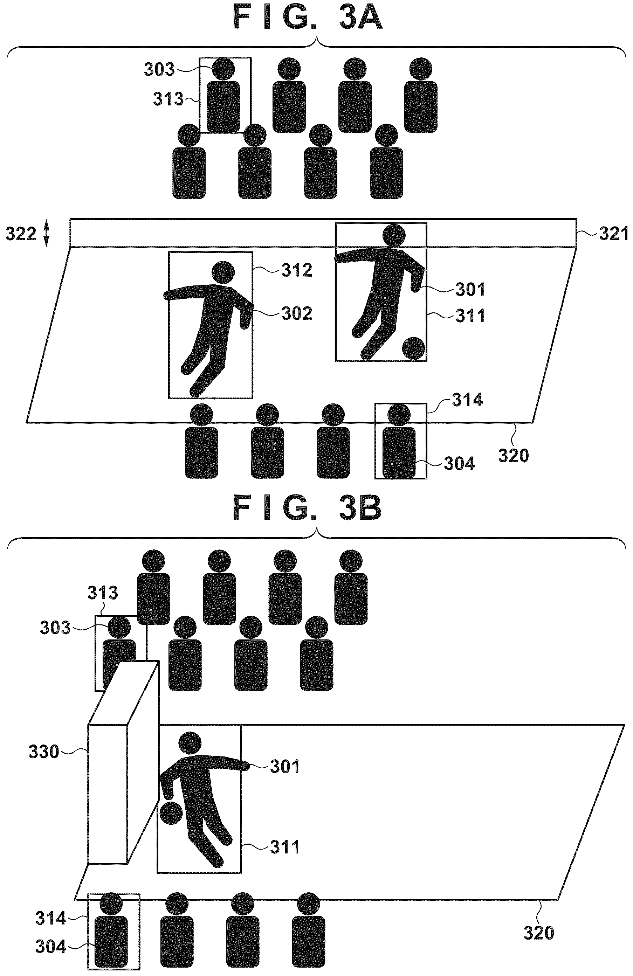

In step S203, the subject classification unit 152 corrects the sports region detected in step S202 to generate a determination target region. Details of the processing in step S203 will be described later with reference to Figs. 3A and 3B.

In step S204, the subject detection unit 150 detects a subject region from the image data obtained in step S201.

In step S205, the subject classification unit 152 performs region inside/outside determination of classifying a subject existing within the sports region and a subject existing outside the sports region based on the determination target region generated in step S203 and the subject region detected in step S204. Details of a region inside/outside determination method in step S205 will be described later with reference to Figs. 3A and 3B. The region inside/outside determination result in step S205 is stored in the volatile memory 143 together with the attribute information of the subject such as a subject position.

In step S206, based on the region inside/outside determination result in step S205, the focus control unit 124 performs AF control by setting, as a subject of interest, the subject existing within the sports region. Note that the present disclosure is not limited to AF control, and any processing such as tracking control or subject attribute determination processing may be executed as long as the processing can be performed using the region inside/outside determination result.

### <Determination Target Region Generation Processing>

Next, the determination target region generation processing in step S203 of Fig. 2 will be described with reference to Figs. 3A and 3B.

Fig. 3A is a view exemplifying the arrangement of competitors, spectators, and a field in a sporting event.

Referring to Fig. 3A, assume that running persons are competitors, and standing persons are spectators. Persons 301 and 302 are competitors, and persons 303 and 304 are spectators. For the sake of descriptive convenience, reference numerals of spectators other than the persons 303 and 304 are omitted. Rectangular frames 311 to 314 are subject detection frames respectively corresponding to regions of the persons 301 to 304 as subjects detected from the image. A region 320 is a sports region (field) and a region 321 is a correction region calculated based on the height at which a competitor can move, for example, jump. For example, when performing shooting from a line of sight that is almost the same as that of the competitor, a jump width in the image is calculated by hf/(zΔ) [pix] where h [mm] represents a height at which the competitor can physically jump, z [mm] represents a distance from the image capture apparatus 100 to the edge of the field, f [mm] represents the focal length of the image capture apparatus 100, and Δ [mm] represents the pixel pitch of the image sensor. This embodiment assumes that shooting is performed from the outside of the field, and the distance to the field is substituted with a known field size. If the distance to the field can be obtained by another method, the value may be used. A width 322 of the region 321 is set by multiplying the value by a coefficient (for example, 1.5) of 1 or more. Given that the width 322 is a value calculated at the edge of the field, it functions as a margin to accommodate variations in the jump height of the competitors.

In a case where the depression angle information of the image capture apparatus 100 is known, such as a case where the image capture apparatus 100 is fixed, the width 322 may be calculated based on z [mm] and h [mm] using the depression angle information by projecting a height at which the competitor can jump onto the image.

The subject classification unit 152 sets, as a determination target region, a region obtained by combining the sports region 320 and the correction region 321. Then, the subject classification unit 152 performs region inside/outside determination based on the degree of overlap between a part of each of the subject detection frames 311 to 314 and the determination target region. In this embodiment, if a part of each of the subject detection frames 311 to 314 and the determination target region overlap each other, for example, if the middle point of the bottom side of each of the subject detection frames 311 to 314 falls within the determination target region, the subject classification unit 152 determines that the subject corresponding to that subject detection frame exists within the determination target region. Alternatively, if a part of each of the subject detection frames 311 to 314 and the determination target region do not overlap each other, for example, if the middle point of the bottom side of each of the subject detection frames 311 to 314 falls outside the determination target region, the subject classification unit 152 determines that the subject corresponding to that subject detection frame exists outside the determination target region.

In the example shown in Figs. 3A and 3B, the middle points of the bottom sides of the subject detection frames 311 and 312 of the competitors 301 and 302 fall within the determination target region but the subject detection frames 313 and 314 of the spectators 303 and 304 fall outside the determination target region. By setting the correction region 321, it is possible to determine that the competitors 301 and 302 exist within the determination target region even in a case where the competitors 301 and 302 jump. By using the bottom side of the subject detection frame, it is possible to determine that the competitor exists within the determination target region even in a case where, for example, the body of the competitor flips upside down as in gymnastics.

Note that region inside/outside determination may be performed not using the middle point of the bottom side of the subject detection frame but using the ratio of the length of the bottom side included in the determination target region to the length of the bottom side or the overlap ratio between the area of the lower portion of the subject detection frame and the determination target region. For example, as the lower portion of the subject detection frame, a lower 1/3 region can be used. If the overlap ratio is used, not only classification into two categories of the inside and the outside of the sports region but also classification into three categories can be performed. For example, if the overlap ratio is lower than a first threshold Th_1, it can be determined that the subject exists outside the sports region. If the overlap ratio falls within the range of the first threshold Th_1 (inclusive) to a second threshold Th_2 (> Th_1) (exclusive), it can be determined to be unknown. If the overlap ratio is equal to or higher than the second threshold Th_2, it can be determined that the subject exists within the sports region. It is also possible to assign the overlap ratio as reliability.

In the example shown in Figs. 3A and 3B, a case where the sports region 320 is at the same height as the ground is assumed. However, it is possible to set, as the correction region of the sports region, a region with a height such as a goal, as shown in Fig. 3B. Fig. 3B is a view for explaining an example of setting a correction region with a height such as a goal for the sports region. Referring to Fig. 3B, for example, in a case where a competitor is highly likely to jump near a goal in basketball and shooting is performed on a court, determination accuracy may be improved by changing a region inside/outside determination condition between a region including the goal and a region including no goal. In the example shown in Fig. 3B, a region 330 is a goal region including a goal belonging to the sports region 320. In the goal region 330, if the middle point of the top side of the subject detection frame 311 falls within the goal region 330, the subject classification unit 152 can determine that the subject corresponding to the subject detection frame 311 exists within the goal region 330, and if the middle point of the top side of the subject detection frame 311 falls outside the goal region 330, the subject classification unit 152 can determine that the subject corresponding to the subject detection frame 311 exists outside the goal region 330.

As described above, according to the first embodiment, by determining whether a subject exists within the determination target region based on the degree of overlap between a part of the subject detection frame and the determination target region, it is possible to readily identify a subject of interest in the image, thereby improving the processing accuracy of the subject of interest.

Note that this embodiment has explained an example in which the subject is a person. However, in a case where the subject is a vehicle like in a racing circuit or a case where the subject is an animal like in a horse racing track, this embodiment is also applicable.

### [Second Embodiment]

The second embodiment will be described next.

The first embodiment has explained an example in which it is determined whether a subject exists within a determination target region based on the degree of overlap between a part of a subject detection frame and the determination target region. In contrast, in the second embodiment, region inside/outside determination is performed using time-series information of a subject detection frame.

This embodiment will describe an example in which region inside/outside determination is performed for each frame of image data using time-series information of a subject detection frame, but the present disclosure is not limited to this and arbitrary time information may be used.

An example in which one or more subjects of interest exist, the middle point coordinates of the bottom side of an ith subject detection frame in an image of a frame n are represented by (xi(n), yi(n)), and region inside/outside determination is performed for all the frames to perform tracking control of the subject of interest will be described below. Note that instead of all the frames, region inside/outside determination may be performed for each predetermined frame, matching of whether the subject of interest is the same subject may be performed, and tracking control of the subject of interest may be performed.

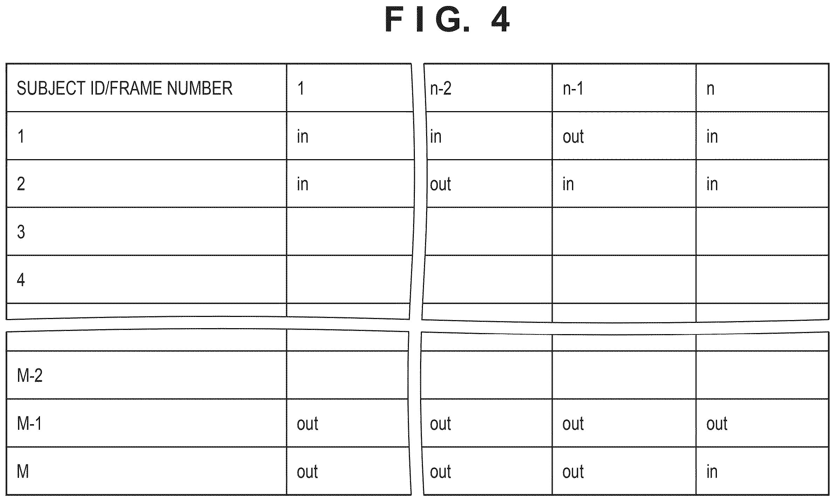

A method of performing region inside/outside determination for each frame of image data will now be described with reference to Fig. 4.

In an example shown in Fig. 4, a row indicates an ID "i" of a subject being tracked and a column indicates a frame number. In addition, "in" and "out" described in each cell indicate whether the ith subject detection frame (xi(k), yi(k)) exists within or outside a determination target region in a frame k. When a frame of interest is the frame n, a subject classification unit 152 counts, for each subject in the image of the frame n, a number m of times of "in" in a predetermined number M of frames at a time before the frame n, and determines, if m/M exceeds a predetermined threshold Th_j, that the subject exists within the determination target region. In this case, m/M can be considered as reliability of a subject i existing within the determination target region.

Furthermore, in a case where a region detection unit 151 detects a sports region based on image data and updates it at a predetermined time interval, detection accuracy may deteriorate due to a change in status. In this case, it is possible to provide reliability for each detection region in the sports region using the region inside/outside determination results of the respective subjects up to an (n-1)th frame.

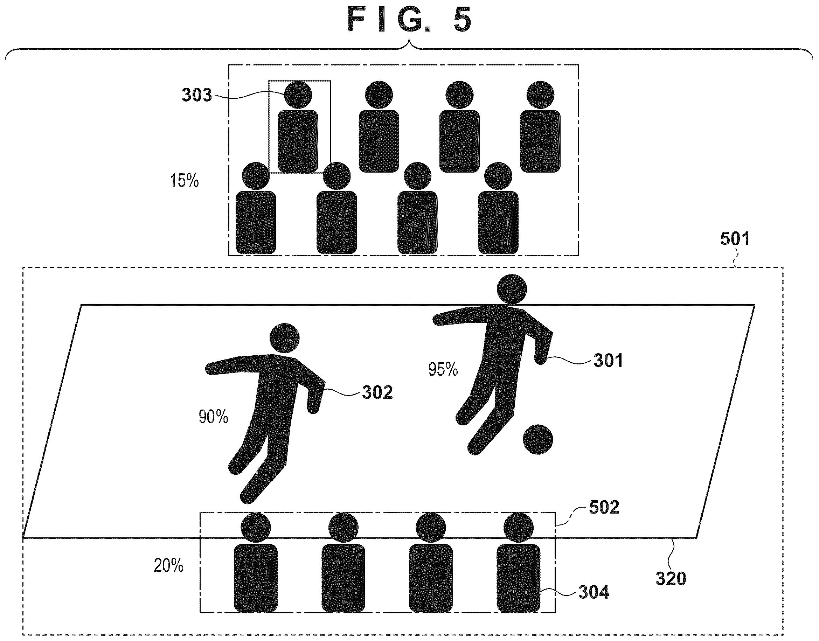

A method of calculating reliability of detection when the region detection unit 151 detects a sports region based on the image data will be described next with reference to Fig. 5.

In Fig. 5, a region 501 indicates a sports region detected by the region detection unit 151, and a region 502 indicates a region including spectators. The remaining portions common to Figs. 3A and 3B are denoted by the same reference numerals, and a description thereof will be omitted.

A numerical value next to each subject represents a probability that the subject exists within the determination target region. In this embodiment, for the sake of descriptive convenience, all the probability values of spectators in the region 502 are 20% but the value is normally different for each subject. The region detection unit 151 sets the reliability in the detected sports region 501 as the probability value of each subject detection frame. This can suppress a deterioration in detection accuracy of the sports region 501.

Furthermore, if an image capture apparatus 100 is fixed, it is possible to use the moving speed of the subject detection frame. For example, in a case where the difference between the middle point coordinate yi(n) of the bottom side of the ith subject detection frame in the image of the nth frame and a middle point coordinate yi(n-1) of the bottom side of the ith subject detection frame in the image of the (n-1)th frame is equal to or larger than a threshold, the subject is excluded from the target of region inside/outside determination. This can exclude, from a determination target, the subject that is highly likely to jump, and set a determination target region to be substantially equivalent to the sports region 320.

As described above, according to the second embodiment, by performing region inside/outside determination using the time-series information of a subject detection frame, it is possible to improve accuracy of identification of a subject of interest in an image.

### [Third Embodiment]

The third embodiment will be described next.

The third embodiment will describe an example of executing sports region detection processing in accordance with the type of a sport or event.

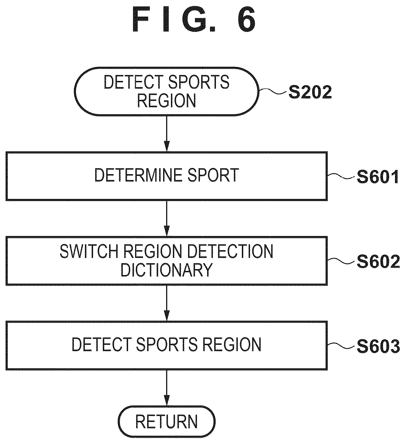

Fig. 6 is a flowchart exemplifying sports region detection processing of the third embodiment in step S202 of Fig. 2.

Note that an apparatus configuration according to the third embodiment is the same as that shown in Fig. 1 according to the first embodiment, and a description of other same components as in the first embodiment will be omitted. Portions different from the first embodiment will mainly be described below.

In step S601, a region detection unit 151 determines the type of a sport such as soccer or basketball from image data. As a method of determining the type of a sport, for example, information of a sport designated by the user via a GUI may be obtained or the type of a sport may automatically be determined using a dictionary learned by machine learning. Note that the present disclosure is not limited to sports, and the same applies to the type of an event. An example of automatically determining the type of a sport using a region detection dictionary will be described below.

Note that the dictionary learned by machine learning is obtained by grouping words and phrases that have something in common.

In step S602, the region detection unit 151 reads out, from a volatile memory 143, a region detection dictionary specialized in a court or a goal for each sport such as soccer or basketball.

In step S603, the region detection unit 151 detects a sports region using the region detection dictionary obtained in step S602, and advances to processing in step S203 of Fig. 2.

With the above-described processing, it is possible to set a determination target region with higher accuracy.

Note that a learned dictionary may be used so as to be able to perform steps S601 and S603 simultaneously.

A subject classification unit 152 may change a region inside/outside determination condition based on the sport determination result in step S601. For example, in a case of a sport in which spectators unlikely exist in front, a method of not determining whether a subject moves out from the lower side of a determination target region may be considered. Thus, it is possible to reduce a determination error of region inside/outside determination in a case where a determination target region is erroneously detected.

As described above, according to the third embodiment, it is possible to set a determination target region with higher accuracy.

### [Fourth Embodiment]

The fourth embodiment will be described next.

The fourth embodiment will describe an example in which in a system where an image processing apparatus 700 and an image capture apparatus 750 are communicatively connected to each other, the image capture apparatus 750 is used to automatically capture a scene in a sports ground or a venue in a sport, an event, or the like, and the image processing apparatus 700 performs region inside/outside determination for an image obtained from the image capture apparatus 750 and automatically edits and/or distributes the image.

The image processing apparatus according to this embodiment is applied to a smartphone, a tablet computer, a desktop computer, or the like that can communicate with the image capture apparatus.

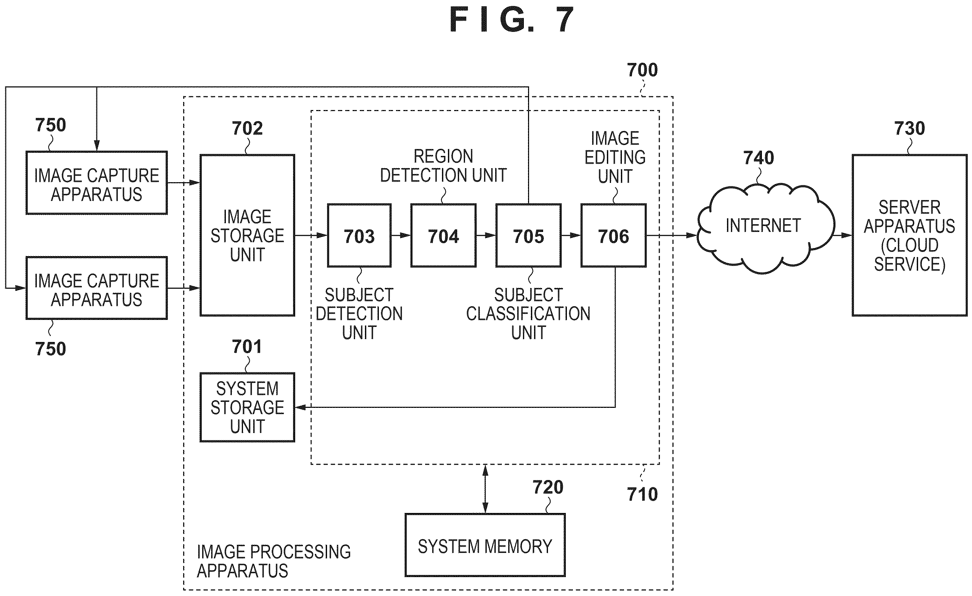

Fig. 7 is a block diagram exemplifying the configuration of the image processing apparatus 700 according to the fourth embodiment.

In the fourth embodiment, a plurality of image capture apparatuses 750 are connected to the image processing apparatus 700, and the image processing apparatus 700 obtains image data from each image capture apparatus 750, and performs region inside/outside determination. Note that in the system according to this embodiment, as long as the positional relationship among the image capture apparatuses 750 is known, the region inside/outside determination results can be shared among the image capture apparatuses 750.

A system storage unit 701 is, for example, a flash ROM, and stores the programs of the respective function units of a system control unit 710, constants for operations, and the like. A system memory 720 is a volatile memory such as a DRAM, into which constants and variables for the operation of the system control unit 710, data read out from the system storage unit 701, and the like are loaded. An image storage unit 702 is, for example, a flash ROM, and stores image data obtained from the image capture apparatus 750. Fig. 7 exemplifies a configuration in which two image capture apparatuses 750 are connected but one or three or more image capture apparatuses 750 may be connected.

The system control unit 710 performs arithmetic processing for controlling the image processing apparatus 700. The system control unit 710 includes a hardware processor such as a CPU or an MPU that controls the respective components of the image processing apparatus 700. The system control unit 710 controls the respective components of the image processing apparatus 700 by loading the program stored in the system storage unit 701 into the system memory 720 and executing the program, thereby implementing the function of the image processing apparatus 700. Note that instead of controlling the overall image processing apparatus 700 by the system control unit 710, the overall image processing apparatus 700 may be controlled by causing a plurality of hardware components (for example, a plurality of processors or circuits) to share the processing.

The system control unit 710 includes a subject detection unit 703, a region detection unit 704, a subject classification unit 705, and an image editing unit 706. The functions of the subject detection unit 703, the region detection unit 704, and the subject classification unit 705 are the same as those of the subject detection unit 150, the region detection unit 151, and the subject classification unit 152 of Fig. 1. In this embodiment, by feeding back the region inside/outside determination result of the subject classification unit 705 to each image capture apparatus 750, each image capture apparatus 750 can perform AF control or tracking control for a subject (subject of interest) existing within a sports region based on the region inside/outside determination result.

The image editing unit 706 performs at least one of editing and distribution of the image data based on the region inside/outside determination result of the subject classification unit 705. The image editing unit 706 edits the image data based on the region inside/outside determination result of the subject classification unit 705, and stores the edited image data in the system storage unit 701. Image editing includes automatic extraction of a moving image cropped by focusing on a competitor of interest or a highlight scene of a play. The image editing unit 706 uploads, via the Internet 740, the edited image to a server apparatus 730 that provides a cloud service or the like.

As described above, according to the fourth embodiment, it is possible to perform at least one of automatic editing and automatic distribution of an image based on the region inside/outside determination result of the image captured by the image capture apparatus 750.

Note that the function (function unit) of each component of the image processing apparatus 700 according to this embodiment is implemented by hardware shown in Fig. 7 and/or a software program executed by the control unit operating as each function unit shown in Fig. 7. Furthermore, in a case where each function unit shown in Fig. 7 is formed by hardware instead of being implemented by software, a circuit configuration corresponding to each function unit shown in Fig. 7 is provided.

### [OTHER EMBODIMENTS]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image processing apparatus (100) comprising:
obtaining means (133) configured to obtain image data;
subject detection means (150) configured to detect a subject region (311 - 314) in the image data;
region detection means (151) configured to detect a first region (320) different from the subject region in the image data; and
classification means (152) configured to classify, based on overlap between a first portion of the subject region and the first region, a subject existing within the first region and a subject existing outside the first region.

2. The apparatus according to claim 1, wherein in a case where the first portion of the subject region and the first region overlap each other, the classification means determines that the subject exists within the first region, and in a case where the first portion of the subject region and the first region do not overlap each other, the classification means determines that the subject exists outside the first region.

3. The apparatus according to claim 1 or 2, wherein the first portion is a bottom side of the subject region.

4. The apparatus according to any one of claims 1 to 3, wherein the first region includes a region (321) set based on a height at which the subject can move.

5. The apparatus according to any one of claims 1 to 4, wherein
the region detection means detects a second region (330) belonging to the first region, and
based on overlap between a second portion of the subject region and the second region, the classification means classifies a subject existing within the second region and a subject existing outside the second region.

6. The apparatus according to claim 5, wherein the second portion is a top side of the subject region.

7. The apparatus according to any one of claims 1 to 6, wherein
the first region is a region including one of a field, court, and a goal in a sport and a stage in an event venue, and
the subject is one of a person who plays the sport and a person who appears in the event venue.

8. The apparatus according to any one of claims 1 to 7, wherein the classification means classifies, for each frame of the image data, the subject existing within the first region and the subject existing outside the first region.

9. The apparatus according to any one of claims 1 to 7, wherein the classification means classifies, based on a speed at which the subject moves, the subject existing within the first region and the subject existing outside the first region.

10. The apparatus according to claim 8 or 9, wherein the region detection means obtains reliability of a result of classifying the subject for each frame of the image data.

11. The apparatus according to claim 7, wherein the region detection means detects the first region based on the image data and a learned dictionary.

12. The apparatus according to claim 11, further comprising second obtaining means (151) configured to obtain a type of the sport or the event venue.

13. The apparatus according to claim 12, wherein the region detection means switches the dictionary based on the type obtained by the second obtaining means.

14. The apparatus according to claim 12, wherein the classification means switches a condition for classifying the subject based on the type obtained by the second obtaining means.

15. The apparatus according to any one of claims 1 to 14, further comprising:
editing means (706) configured to edit the image data based on a result of classification by the classification means; and
at least one of storage means (701) configured to store an image edited by the editing means and distribution means (710) configured to distribute an image edited by the editing means.

16. The apparatus according to any one of claims 1 to 15, further comprising:
imaging means (131) configured to generate image data by capturing an image; and
control means (124, 153) configured to perform one of focus control and tracking control for the subject existing within the first region.

17. An image processing method executed by an image processing apparatus, comprising the steps of:
obtaining image data;
detecting a subject region in the image data;
detecting a first region different from the subject region in the image data; and
classifying, based on overlap between a first portion of the subject region and the first region, a subject existing within the first region and a subject existing outside the first region.

18. A computer-readable storage medium storing a computer program comprising instructions which, when the program is executed by a computer, cause the computer to carry out the method of claim 17.

19. A computer program comprising instructions which, when the program is executed by a computer, cause the computer to carry out the method of claim 17.
